Europäisches Patentamt

**European Patent Office**

Office européen des brevets

(11) Publication number: **0 038 650**
A1

(12) **EUROPEAN PATENT APPLICATION**

(21) Application number: **81301547.6**

(22) Date of filing: **08.04.81**

(51) Int. Cl.³: **B 05 B 13/04**
**B 05 B 13/06, B 25 J 9/00**

(30) Priority: **17.04.80 GB 8012644**

(43) Date of publication of application:
**28.10.81 Bulletin 81/43**

(84) Designated Contracting States:
**BE DE FR IT NL SE**

(71) Applicant: **HALL AUTOMATION LIMITED**
**Marconi House New Street**
**Chelmsford Essex CM1 1PL(GB)**

(72) Inventor: **Hall, Douglas Cresswell**
**3, Canons Close**
**Radlett Hertfordshire(GB)**

(74) Representative: **Hooper, John Peter Lindesay**
**Marconi House New Street**
**Chelmsford, Essex CM1 1PL(GB)**

(54) **Production line systems.**

(57) A production line system wherein a workpiece is carried along a first line, and comprising automatic equipment for effecting an operation on the workpiece.

A workpiece (say, a car 11) is pivotally mounted on a main production line (10) so that as it reaches the appropriate work section (say, a spray painting booth) it can be turned or swung out of line towards automatic equipment (say, a spray gun 13) mounted on a second line (12) adjacent and parallel to the first, thus giving to the equipment relatively unrestricted access to the workpiece as the two move along synchronised with each other until the operation being effected is complete.

EP 0 038 650 A1

## Production Line Systems

This invention concerns production line systems, and relates in particular - though not exclusively - to the production-line painting of hollow open-ended objects such as car and van bodies.

It is common practice these days for all sorts of objects to be manufactured on a production-line basis, and this is particularly true of cars, vans and other similar vehicles. By way of example, on a modern car production line the various parts making up each car - the subframe, body panels, engine, road wheels, wiring harness, electrical parts, doors, interior trim - are all delivered in the right order and at the right time and place to the line so that as that "car" proceeds along the line it may be gradually assembled into the finished vehicle. The cars in the line just ahead are at a slightly more advanced state of production, while the cars just behind are at a slightly less advanced state, and always it is the desire of the line manager to position each car as close to its neighbours as possible, and to run the line at as high a speed as possible, so as to attain the maximum line output.

Many of the jobs along the line are now done automatically, often by "robot" equipment programmed to locate the workpiece, do the job, disengage, and move on to the next workpiece. A typical example of such equipment is that used for spray-painting: a spray gun mounted on the end of a suitably manouverable arm is controlled (usually by a taped program feeding a microcomputor) to go through certain standard spraying operations which, it is predetermined, will result in the "target" object being satisfactorily painted provided it is in the right place at the right time. Unfortunately, unlike a human being, who operates more or less independantly of the line, and can clamber around or in and out of the workpiece to do the required job, current automatic equipment is essentially tied to its own section of the line, and this means that it is on occasion very difficult for the operation to be performed by the available "robot" because there just isn't enough room. Such a problem may well arise when it is the inside of the item (a van body, for example) that is to be worked upon, and when successive items on the line are positioned very close together. As can be appreciated, there may simply not be sufficient room between successive items to allow the equipment easily to be inserted into each item as it travels past or along the automatic equipment's section of the line.

The invention seeks to deal with this difficulty by arranging for the workpiece to be pivotally mounted on the line so that as it reaches the appropriate work section it can be turned or swung out of line towards the automatic equipment, thus giving to the latter relatively unrestricted access.

In one aspect, therefore, this invention provides a production line system wherein an item (workpiece) to be worked upon is carried along a first line, automatic equipment for effecting an operation on the item is carried along a second line adjacent the first and in synchronism therewith, and there is means enabling the orientation of the item on the first line to be altered so allowing the equipment readier access thereto.

The type of production line for which the invention is especially suited is, as intimated above, that employed in the manufacture of automotive vehicles such as cars and vans. Such a line will normally have many work sections at each of which a different operation - welding, fitting, painting, doing up nuts and bolts - is effected, and in general the invention relates to the one operation carried out along one such section.

- 3 -

0038650

While it is presumed that each line employs supports, or carriages, upon which the items or the equipment (as appropriate) are mounted, the actual physical nature of either line - whether it be a ground-based track upon which the object sits on a carriage, or some sort of overhead way from which the object is suspended from a carriage - is immaterial; the invention may be applied to any physical form of line.

While clearly the operation itself could be any of those operations which can be effected by automatic equipment travelling along with the line, nevertheless the invention has been found particularly suitable where the operation is painting - especially spray painting - of the inside of a hollow workpiece (such as a car or van), particularly when the workpiece is of a fair length relative to the gap between adjacent workpieces on the line, and when the painting equipment is to be inserted into the workpiece from one end thereof.

The two lines are adjacent each other, and most conveniently run in a parallel, side-by-side relationship. Moreover, the second line is synchronised with the first (so that the item and the equipment can stop or travel along together) in what is preferably a stationary relationship. Advantageously there are means to ensure that the desired synchronous relationship is both attained and maintained as required. For example, a tachogenerater may be mounted upon one of the first line conveyor drive spindles, generating a signal which is indicative of that line's speed and which may be used to control the speed of the second line.

The invention may be regarded as being characterised by the feature that the system includes means enabling the orientation of the item (workpiece) borne by the first line to be changed so giving the equipment easier access thereto. Clearly, the actual change, and the means by which it is effected, may be any suitable in the circumstances. Thus, the means may involve a line-borne carriage upon which the workpiece is mounted, the carriage itself being in two parts, one (carrying the workpiece) being moveable in pitch, roll and/or yaw relative to the other (attached to the line) so that the workpiece may be presented to the equipment in the desired orientation. In the case of the preferred use (painting car or van interiors), however, it is convenient if the workpiece (the car or van body) is merely pivoted so as to swing or swivel an open end out to the side where awaits the painting equipment. Moreover, since, in the typical case for such a preferred, painting, use, the lines at that work station generally pass through a booth of somewhat limited width, it will be usual for the degree of sideways pivotting to be the smallest possible consistent with enabling access of the painting equipment.

In order to steady (or stabilize) the workpiece relative to the equipment, especially in the case where the workpiece is suspended from an overhead line, it is preferred if in addition the invention includes means whereby the workpiece and the equipment may effectively be "locked" together during the carrying-out of the operation, and then be automatically disengaged at the end thereof. It is convenient, therefore, if each support for the equipment carries means enabling it to be detachably locked to the support for the workpiece, or to the workpiece itself, during the operation performed on the workpiece by the equipment. The equipment support system might, for instance, carry a pneumatically-operated plunger which at the appropriate moment is extended into (and later withdrawn from) some suitable aperture in the workpiece or the latter's support.

As so far described, the inventive production line system employs two lines - a first line carrying the workpiece and a single second line carrying the operating equipment. However, it may often be the case, especially when the first line moves relatively fast and is relatively densely packed with workpieces, that the operation to be effected can best be carried out using two (or more) second lines suitably spaced on either side of the first line. Such a system is described hereinafter with reference to the drawings; it has the advantage that each work operation may be carried out in a more leisurely and thorough manner despite the speed and packing density of the first line.

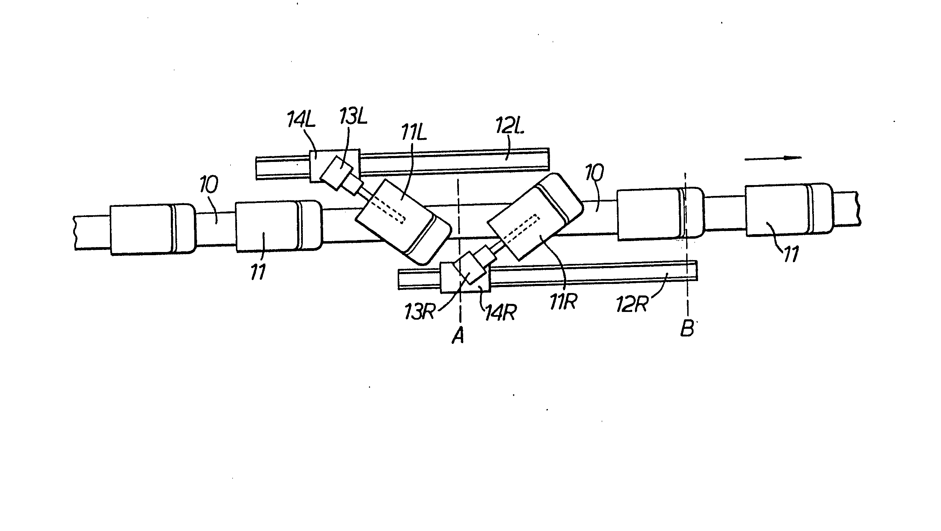

An embodiment of the invention is now described, though only by way of illustration, with reference to the accompanying drawings, in which the Figure shows a schematic plan view of part of an inventive production line system.

The inventive production line system shown in the Figure is an automotive van production line, and the particular operation being carried out by the automatic equipment is the spray painting of the inside of the vans "on the move".

As can be seen from the Figure, the system basically comprises three lines - a main (or first) line (10) carrying the van bodies (as 11), and two short subsidiary (or second) lines (rails 12L, 12R) each carrying automatic spray painting equipment (13L, 13R). One such line (12L) is on the left of the main line 10, while the other (12R) is on the right, and is forwardly staggered with respect to the one on the left.

Each van body 11 is pivotally mounted (by means not shown) so that it can be swung to one side or the other; two of the vans (11L and 11R) are shown with their rear ends swung out to the left and to the right respectively.

The operation of the system is as follows.

As the main line 10 moves along (from left to right in the Figure), van body 11R reaches a point (A) abreast the start of the subsidiary line 12R at which the spray equipment 13R begins its synchronous movement down the line and at the same time the rear end of the van body 11R is swung out to the right, presenting its open rear end to the spray equipment. The van mounting means (not shown) is physically locked, by means not shown, to the spray equipment carriage (14R) and the two proceed down their individual lines as though they were one, the spray equipment extending into the van body and carrying out its predetermined spraying operation on the inside of the van as they go. When the van body 11R reaches a point (B) adjacent the end of the subsidiary line 12R the spray equipment withdraws, the van mounting means and the equipment carriage disengage. and the van swings back into line and proceeds on down the main line 10 while the spray equipment backs up the subsidiary line 12R, waiting at the start for the next van body to arrive at point A.

The same procedure occurs for the left hand subsidiary line 12L. It will be seen that, because the two subsidiary lines are staggered, they operate upon alternate van bodies; this allows each subsidiary line 12 to travel with the main line 10 for twice the time interval between van bodies 11, and so enables the painting operation (and the return) to be effected in a relatively leisurely and thorough manner.

CLAIMS:

1. A production line system of the sort wherein an item (workpiece) to be worked upon is carried along a first line, and automatic equipment for effecting an operation on the item is carried along a second line adjacent the first and in synchronism therewith, characterised in that there is means enabling the orientation of the item (11) on the first line (10) to be altered so allowing the equipment (13) readier access thereto.

2. A production line system as claimed in claim 1, wherein the line is employed in the manufacture of automotive vehicles.

3. A production line system as claimed in either of the preceding claims, wherein the actual physical nature of either line is a ground-based track upon which the item or workpiece (as appropriate) sits on a carriage.

4. A production line system as claimed in any of the preceding claims, wherein the operation being effected is the spray painting of the inside of a hollow workpiece, the workpiece is of a fair length relative to the gap between adjacent workpieces on the line, and the painting equipment is to be inserted into the workpiece from one end thereof.

5. A production line system as claimed in claim 4, wherein the workpiece is merely pivoted so as to swing or swivel an open end out to the side where awaits the painting equipment.

6. A production line system as claimed in any of the preceding claims, wherein there are means to ensure that the desired synchronous relationship between the first and second lines is both attained and maintained as required.

7. A production line sustem as claimed in any of the preceding claims, wherein in addition there is means whereby the workpiece and the equipment may effectively be "locked" together during the carrying-out of the operation, and then be automatically disengaged at the end thereof.

8. A production line system as claimed in claim 7, wherein each support for the equipment carries means enabling it to be detachably locked to the support for the workpiece, or to the workpiece itself, during the operation performed on the workpiece by the equipment.

9. A production line system as claimed in any of the preceding claims, wherein there are two (or more) second lines suitably spaced on either side of the first line.

1/1

**0038650**

European Patent
Office

**EUROPEAN SEARCH REPORT**

Application number

EP 81 30 1547

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | US - A - 3 952 699 (H. DURR)  <br>   * Figures 1,3; column 6, lines 10-51 *  <br> -- | 1,2 | B 05 B 13/04 <br> 13/06 <br> B 25 J 9/00 |
| | US - A - 3 283 918 (G.C. DEVOL)  <br>   * Figures 1,7,8; column 3, lines 12-62; column 13, lines 29-38 *  <br> -- | 3,4,6-8 | |
| | JP - A - 53 3438 (MATSUSHITA DENKI SANGYO K.K.)  <br>   * Abstract *  <br> -- | 4,6 | TECHNICAL FIELDS SEARCHED (Int. Cl.³) <br><br> B 05 B <br> B 25 J |
| | JP - A - 52 117 938 (MATSUSHITA DENKI SANGYO K.K.)  <br>   * Abstract *  <br> -- | 4,6 | |
| | GB - A - 2 013 934 (GENERAL MOTORS CORP.)  <br>   * Figure 1; page 2, lines 1-7 *  <br> -- | 6 | |
| | FR - A - 2 397 234 (BASFER S.R.L.)  <br>   * Figure 2 *  <br> & GB - A - 2 002 142  <br> ---- | 2,9 | |

| | | | |
|---|---|---|---|
| ✗ | The present search report has been drawn up for all claims | | |
| Place of search | Date of completion of the search | Examiner | |
| The Hague | 27-07-1981 | COLPAERT | |

EPO Form 1503.1  06.78